# EUROPEAN PATENT SPECIFICATION

(11) **EP 2 033 111 B1**
(45) Date of publication and mention of the grant of the patent: **14.11.2018**
(21) Application number: 07760285.2
(22) Date of filing: 06.04.2007
(51) Int. Cl.: H04L 29/06

(54) **IMPLEMENTATION OF REFLEXIVE ACCESS CONTROL LISTS ON DISTRIBUTED PLATFORMS**
IMPLEMENTIERUNG VON REFLEXIVEN ZUGANGSKONTROLLLISTEN AUF VERTEILTEN PLATTFORMEN
IMPLÉMENTATION DE TABLES RÉFLEXIVES DES CONTRÔLES D'ACCÈS SUR DES PLATES-FORMES DISTRIBUÉES

(30) Priority: 18.05.2006 US 436844
(43) Date of publication of application: 11.03.2009
(73) Proprietor: Cisco Technology, Inc., San Jose, CA 95134 (US)
(72) Inventor: BAMNOLKER, Yehuda, Cupertino, California 95014 (US)
(74) Representative: Kazi, Ilya
(86) International application number: PCT/US2007/066186
(87) International publication number: WO 2007/136937

(56) References cited:
- US-A1- 2002 099 823
- US-A1- 2004 078 485
- Cisco Press: "Cisco IOS Security Configuration Guide, Release 12.2", , 5 August 2005 (2005-08-05), XP002664157, Retrieved from the Internet: URL:http://www.cisco.com/en/US/docs/ios/12 _2/security/configuration/guide/scfbook.pd f [retrieved on 2011-11-23]
- C. Riley et AL: "The Best Damn Cisco Internetworking Book Period", 2003, Syngress Publishing Inc., XP002664158, ISBN: 1-931836-91-4 * page 26 - page 46 * * page 730 - page 745 *
- P. Grossetete: "Cisco IOS IPv6 Access Control Lists", , 2003, XP002664162, Retrieved from the Internet: URL:http://www.ipv6-tf.com.pt/documentos/g eral/cisco/ipv6_Acls_Abr2003.pdf [retrieved on 2011-11-23]

## Description

### BACKGROUND

### Field of the Invention

The present invention generally relates to network communication systems and more particularly to the filtering of data communications passing between networks.

### Related Art

In modern networking environments, data communications are frequently exchanged among a plurality of different networks. Security is an overriding concern for users and administrators of such networks, especially when data packets are passed between a secured trusted network and an unsecured external network. As a result, various data packet filtering schemes have been developed to improve the security of inter-network communications.

One approach to data packet filtering involves the use of access control lists. Access control lists may be implemented at routers or other network communication devices which border at least two networks. Access control lists are generally static lists that include entries which define a set of classification rules associated with a given interface (i.e., port) and direction for filtering data packets received at the interface. Data packets are evaluated against entries in the access control list and are selectively passed between the networks depending on whether associated criteria of the data packets (such as source/destination addresses, communication protocols, or other information) are found to match criteria specified in permit entries of the access control list.

Unfortunately, given their relatively static nature, access control lists can be cumbersome to implement. In particular, access control lists typically must include entries corresponding to all allowable data packet traffic that may conceivably pass between networks. As a result, access control lists are generally permanent and therefore are not well suited to accommodate temporary data sessions of short duration.

One alternative to conventional access control lists is the use of reflexive access control lists. In contrast to conventional access control lists, reflexive access control lists include entries that are dynamically added in response to trusted data communications. For example, if an outbound data packet originating from a trusted network is received by a router supporting reflexive access control lists, an entry corresponding to the data packet may be created in a reflexive access control list which will persist for a predetermined time period. An inbound data packet received by the router from an external network in response to the outbound data packet can be compared with the reflexive access control list. If a matching entry is found in the reflexive access control list, then the inbound data packet will be deemed to be part of a data session originating from the trusted network and will be forwarded onto the trusted network.

Reflexive access control lists are typically maintained locally at each line card of a network device. As a result, whenever a new entry is created in a reflexive access control list, all traffic must be temporarily suspended while the new entry is created in order to prevent the accidental passing of additional packets which have not yet been evaluated. For implementations with low traffic volumes and a single interface under central control, such traffic interruptions may be tolerable. Distributed platforms, on the other hand, can be required to route large volumes of data packets, for example in the range of 70-80 million data packets per second. For such complex systems, even small interruptions can cause substantial backlogs in data traffic flow. Moreover, for systems supporting many different interfaces across various networks, multiple reflexive access control list entries associated with many interfaces must be updated which can further complicate such implementations.

Accordingly, there is a need for an improved approach to inter-network data packet routing that provides selective filtering of data packets without substantially interrupting traffic flow.

Cisco Press: "Cisco IOS Security Configuration Guide, Release 12.2" describes how to configure reflexive access lists on a router. It states that before configuring reflexive access lists, it must be decided whether to configure the lists on an internal or external interface. It is also stated that to configure reflexive access lists for an external interface, the following tasks must be performed:
1. Defining the reflexive access list(s) in an *outbound* IP extended named access list
2. Nesting the reflexive access lists(s) in an *inbound* IP extended named access list
3. Setting a global timeout value.

C. Riley et al: "The Best Damn Cisco Internetworking Book Period" states that a reflexive ACL is a feature added to an extended ACL and can only be defined using extended named IP ACLs. As traffic leaves the network, it will match the traffic in the Outbound-List ACL. The reflect statement will add the mirror image entry to the Reflected-List ACL. When return traffic is checked against the Inbound-List ACL, which runs the evaluate command on Reflected-List, it will be allowed back to the original host.

P. Grossetete: "Cisco IOS IPv6 Access Control Lists" describes that a reflexive ACL is created dynamically, when traffic matches a permit entry containing the reflect keyword. It also discloses configuring an interface, ethernet -0, with a reflexive ACL.

US 2004/078485 A1discloses a method for routing data packets. The method includes establishing an ingress filter in individual ones of a plurality of line cards installed within a router and automatically maintaining a content of an ingress filter table of each ingress filter in each line card at least partially in accordance with data packets passing through individual ones of the line cards, where the content includes an identification of source addresses of hosts coupled to the router. The method further compares a source address of an incoming packet to a line card to the content of the ingress filter table of that line card, and is thus enabled to detect the presence of an IP packet containing a spoofed IP host address.

### STATEMENT OF INVENTION

The present invention provides a method, a networking device and a computer readable medium as defined in the appended claims.

### BRIEF DESCRIPTION OF THE FIGURES

Fig. 1 is a block diagram illustrating a networked system providing data packet filtering in accordance with an embodiment of the present invention.
Fig. 2 is a flowchart illustrating a process for filtering outbound data packets originating from a trusted network in accordance with an embodiment of the present invention.
Fig. 3 is a flowchart illustrating a process for filtering inbound data packets received from an external network in accordance with an embodiment of the present invention.

Like element numbers in different figures represent the same or similar elements.

### DETAILED DESCRIPTION

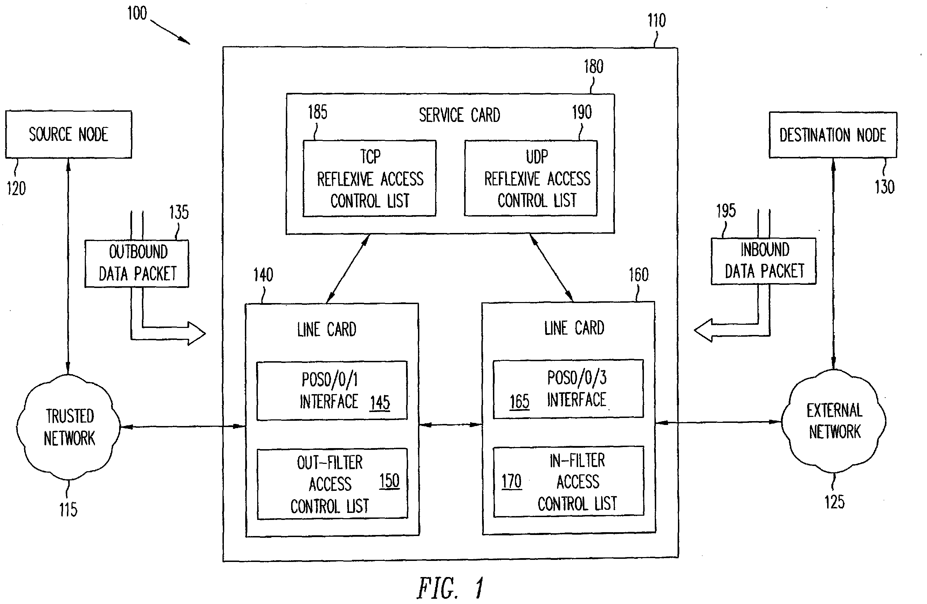

Referring now to the drawings wherein the showings are for purposes of illustrating embodiments of the present invention only, and not for purposes of limiting the same, Fig. 1 is a block diagram illustrating a networked system 100 supporting data packet filtering using access control lists and reflexive access control lists in accordance with an embodiment of the present invention.

As illustrated, system 100 includes a router 110 which may be configured to route data packets between networks 115 and 125. Although various aspects of the present invention will be described herein in relation to router 110, it will be appreciated that the various features of router 110 may be applied to any appropriate network device including, but not limited to switches, firewalls, and/or other equipment.

In various embodiments, each of networks 115 and 125 may be implemented as one or more local area networks (LANs), wide area networks (WANs), intranets, wireless networks, and/or other network arrangements known in the art. For example, network 115 may be a trusted secure network associated with, or under the control of, an entity such as a business, residence, or other organization. Network 125 may be an external unsecured network (e.g., the Internet) that is not under the control of such an entity, or is less secure than network 115.

Router 110 may be implemented to filter network traffic traversing between a source node 120 (for example, an enterprise host device) of the trusted network 115 and a destination node 130 (for example, an external device) of the external network 125. As illustrated, router 110 may include line cards 140 and 160 in communication with networks 115 and 125 which may receive a plurality of outbound and inbound data packets 135 and 195, respectively. It will be appreciated that although only two line cards are illustrated in the embodiment of Fig. 1, router 110 may be provided with additional line cards providing the same or similar features as line cards 140 and 160 as may be desired in particular implementations.

Each of line cards 140 and 160 may support one or more interfaces through which to send and receive communications with networks 115 and 125. For example, in the embodiment of Fig. 1, line card 140 is illustrated as supporting an interface 145 (labeled POS0/0/1) and line card 160 is illustrated as supporting an interface 165 (labeled POS0/0/3). Line cards 140 and 160 may also maintain access control lists 150 and 170, respectively, which may be used by line cards 140 and 160 to provide static filtering of data traffic between networks 115 and 125. For example, access control list 150 may be used as an outbound filter to selectively filter outbound data packets 135 from trusted network 115 to external network 125 (i.e., in an egress direction). Access control list 170 may be used as an inbound filter to selectively filter inbound data packets 195 from external network 125 to trusted network 115 (i.e., in an ingress direction).

Each of access control lists 150 and 170 may include a plurality of entries which, when matched to a data packet received at one of interfaces 145 or 165, can instruct router 110 to permit, deny, reflect, or evaluate the data packet as further described herein. In one embodiment, each of line cards 140 and 160 may be implemented using dedicated hardware supporting Ternary Content Addressable Memory (TCAM) to support rapid lookups of access control list entries.

Table 1 below sets forth an exemplary embodiment of access control list 150 which may be implemented on line card 140:

**TABLE 1**

| ipv4 access-list out-filter |
|---|
| [regular permit/deny entries] |
| ... ... |
| [regular permit/deny entries] |
| 55 permit tcp any any reflect tcp-reflex-list |
| 65 permit udp any any reflect udp-reflex-list |

As identified in Table 1, access control list 150 (i.e., out-filter in Table 1 above) may include a plurality of conventional entries (labeled regular permit/deny entries) which may specifically permit or deny the routing of outbound data packets 135 from network 115 to network 125. In addition, access control list 150 further includes a plurality of entries (numbered 55 and 65) which reference reflexive access control lists 185 and 190 (labeled tcp-reflex-list and udp-reflex-list) which are maintained by a service card 180 of router 110 as further described herein.

Accordingly, if packet 135 contains the header information set forth in Table 2 below, it will be found to match entry 55 in access control list 150:

**TABLE 2**

| | |
|---|---|
| Source IP address: | 1.1.1.1 |
| Destination IP address: | 2.2.2.2 |
| Source port: | 30 |
| Destination port: | 40 |
| Protocol type: | TCP |

Table 3 below sets forth an exemplary embodiment of access control list 170 which may be implemented on line card 160:

**TABLE 3**

| ipv4 access-list in-filter |
|---|
| [regular permit/deny entries] |
| ... ... |
| [regular permit/deny entries] |
| 300 evaluate tcp-reflex-list |

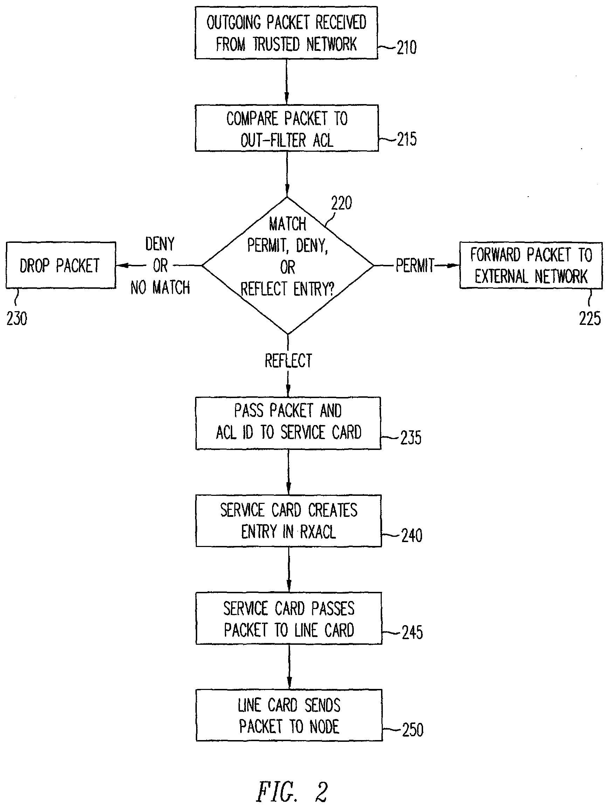

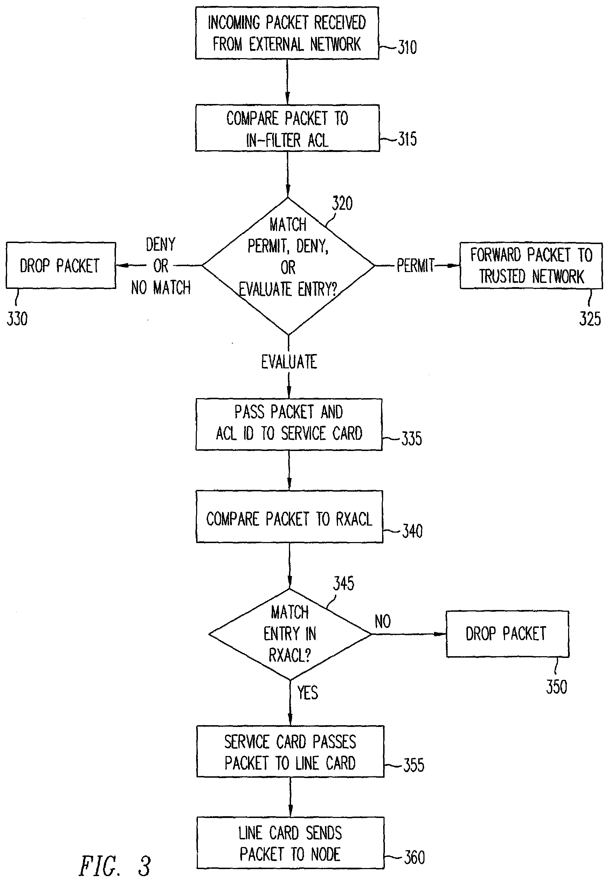

As similarly described in Table 1, access control list 170 of Table 3 may include a plurality of conventional entries (labeled regular permit/deny entries) which may specifically permit or deny the routing of inbound data packets 195 from network 125 to network 115. In addition, access control list 170 further includes an entry (numbered 300) which references reflexive access control list 185. The operation of access control lists 150 and 160 can be understood in view of Figs. 2 and 3 as further described herein.

Service card 180 of router 110 is in communication with line cards 140 and 160. Service card 180 may be implemented as any appropriate hardware and/or software of router 110 providing various processing features further described herein. For example, in one embodiment, service card 180 may be implemented through dedicated hardware, such as a processor separate from line cards 140 and 160. Service card 180 may also include TCAM to support rapid lookups of reflexive access control list entries. Advantageously, service card 180 may maintain one or more reflexive access control lists 185 and 190 which serve each of line cards 140 and 160, as further described herein. As illustrated in Fig. 1, each of reflexive access control lists 185 and 190 may be associated with a particular networking protocol.

Table 4 below sets forth an exemplary embodiment of reflexive access control list 185 which may be implemented on service card 180:

**TABLE 4**

| tcp-reflect-list |
|---|
| permit tcp 2.2.2.2 0.0.0.0 eq 40 1.1.1.1 0.0.0.0 eq 30 |

Fig. 2 is a flowchart illustrating a process for filtering one or more outbound data packets 135 originating from network 115 in accordance with an embodiment of the present invention. At initial step 210, outbound data packet 135 originating from source node 120 of network 115 is received at interface 145 of line card 140. As will be appreciated by those skilled in the art, outbound data packet 135 may be provided in accordance with a particular networking protocol (for example, TCP or UDP) and may further specify a source address associated with source node 120 and a destination address associated with destination node 130.

At step 215, line card 140 compares outbound data packet 135 with access control list 150. It will be appreciated that in the various comparing steps of Figs. 2 and 3, a match may be found if a keyword corresponding to particular criteria (such as a source address, destination address, communication protocol, and/or other information) of a data packet is found to match corresponding criteria of an entry in the compared list. Referring to the embodiment of access control list 150 represented in Table 1 above, if outbound data packet 135 matches one of the conventional permit entries, then line card 140 will forward outbound data packet 135 on to external network 125 and destination node 130 through interface 165 of line card 160. In another embodiment, line card 140 may interface directly with external network 125 without passing data packets through line card 160.

If outbound data packet 135 matches one of the conventional deny entries or if no match is found (step 220), then line card 140 will drop the packet (step 230). If, in step 220, outbound data packet 135 matches a reflect entry of access control list 150 (for example, if outbound data packet 135 corresponds to a TCP or UDP protocol), then line card 140 will pass the outbound data packet to service card 180 along with an identifier associated with access control list 150 (step 235) to direct service card 180 to process the outbound data packet in accordance with an appropriate one of reflexive access control lists 185 and 190.

At step 240, service card 180 creates (i.e., installs) a reflex entry in one of reflexive access control lists 185 or 190 corresponding to the outbound data packet 135. For example, if outbound data packet 135 corresponds to a TCP protocol, then service card 180 may create an entry in reflexive access control list 185. Similarly, if outbound data packet 135 corresponds to a UDP protocol, then service card 180 may create (i.e., automatically install) an entry in reflexive access control list 190. In this regard, service card 180 may be implemented with an auto-install TCAM device. As will be appreciated by those skilled in the art, entries in reflexive access control lists 185 and 190 may swap the source address of source node 120 and the destination address of destination node 130 as well as source/destination ports, in order to match inbound data packets 195 received in reply to outbound data packets 135.

After creating a corresponding entry in one of reflexive access lists 185 or 190, service card 180 passes outbound data packet 135 to line card 160 (step 245) which then forwards outbound data packet 135 on to external network 125 and destination node 130 through interface 165 (step 250).

It will be appreciated that the process of Fig. 2 may be repeated as desired for a plurality of outbound data packets 135. In this regard, it will be appreciated that as different outbound data packets 135 corresponding to different data sessions originating from network 115 are processed by line card 140 and service card 180, reflexive access control lists 185 and 190 will be populated by a plurality of access control list entries for any data packets found to match a reflect entry in step 220.

Advantageously, line card 140 is not required to perform steps 240 through 250 of Fig. 2 for each outbound data packet 135. Rather, after line card 140 performs the comparison of step 215 and provides an appropriate response (i.e., forwarding, dropping, or passing the outbound data packet 135 in steps 225, 230, or 235, respectively), it is available to process the next outbound data packet 135 which may be received from network 115. As a result, the burden of maintaining reflexive access control lists 185 and 190 can be shifted to service card 180 while permitting line card 140 to continuously forward or drop other data packets (i.e., outbound data packets 135 that are found to match a permit entry, a deny entry, or no entry in access control list 150).

Fig. 3 is a flowchart illustrating a process for filtering one or more inbound data packets 195 originating from network 125 in accordance with an embodiment of the present invention. It will be appreciated that inbound data packets 195 processed in accordance with the steps Fig. 3 may be received by router 110 as part of a data session initiated by an outbound data packet 135 previously processed by router 110 in accordance with the steps of Fig. 2.

At initial step 310, inbound data packet 195 originating from destination node 130 of network 125 is received at interface 165 of line card 160. Inbound data packet 195 may be provided in accordance with a particular networking protocol (for example, TCP or UDP). In addition, because inbound data packet 195 originates from destination node 130, it may exhibit a source address associated with node 130 and a destination address associated with node 120.

At step 315, line card 160 compares inbound data packet 195 with access control list 170. For example, referring to the embodiment of access control list 170 represented in Table 3 above, if inbound data packet 195 matches one of the conventional permit entries, then line card 160 will forward inbound data packet 195 on to trusted network 115 and source node 120 through interface 145 of line card 140. In another embodiment, line card 160 may interface directly with trusted network 115 without passing data packets through line card 140.

If inbound data packet 195 matches one of the conventional deny entries of access control list 170 or if no match is found (step 320), then line card 160 will drop the inbound data packet (step 330). If, in step 320, inbound data packet 195 matches an evaluate entry of access control list 170 (for example, if inbound data packet 195 corresponds to a TCP or UDP protocol), then line card 160 will pass the inbound data packet 195 to service card 180 along with an identifier associated with access control list 170 (step 335) to direct service card 180 to process the inbound data packet in accordance with an appropriate one of reflexive access control lists 185 and 190.

At step 340, service card 180 compares inbound data packet 195 to the one of reflexive access control lists 185 or 190 matched in previous step 320. For example, if inbound data packet 195 corresponds to a TCP protocol, then service card 180 may compare inbound data packet 195 to entries in reflexive access control list 185.

As previously described in relation to Fig. 2, entries in reflexive access control lists 185 and 190 may swap the source address of source node 120 and the destination address of destination node 130 in order to match corresponding inbound data packet 195. As a result, when inbound data packet 195 is compared to particular entries in reflexive access control list 185 or 190, its corresponding source and destination addresses may match an appropriate entry previously created in step 240 of Fig. 2 for an outbound data packet 135.

If no matching entry is found, then service card 180 will drop the inbound data packet (step 350). If a match is found, however, service card 180 passes the inbound data packet 195 to line card 140 (step 355) which then forwards inbound data packet 195 on to trusted network 115 and node 120 through interface 145 (step 360).

Similar to Fig. 2, it will be appreciated that the process of Fig. 3 may be repeated as desired for a plurality of inbound data packets 135. Advantageously, line card 160 is not required to perform steps 340 through 360 of Fig. 3 for each inbound data packet 195. Rather, after line card 160 performs the comparison of step 315 and provides an appropriate response (i.e., forwarding, dropping, or passing the inbound data packet 195 in steps 325, 330, or 335, respectively), it is available to process the next inbound data packet 195 which may be received from network 125. As a result, the burden of evaluating inbound data packets 195 against reflexive access control lists 185 and 190 can be shifted to service card 180 while permitting line card 160 to continuously forward or drop other data packets (i.e., inbound data packets 195 that are found to match a permit entry, a deny entry, or no entry in access control list 170).

In addition, service card 180 may be implemented to remove entries from reflexive access control lists 185 and 190 after a predetermined time period. As a result, if an inbound data packet 195 responsive to an outbound data packet 135 is not received after expiration of the predetermined time period, it will not be permitted to pass through from external network 125 to trusted network 115. As a result, router 110 can be configured to support temporary data sessions of limited duration without requiring alterations to static access control lists 140 and 160.

In view of the present disclosure, it will be appreciated that by maintaining and processing reflexive access control lists 185 and 190 on a service card 180 separate from line cards 140 and 160, router 110 can support greater throughput of outbound and inbound data packets 135 and 195, respectively. In particular, line cards 140 and 160 can support a continuous flow of outbound and inbound data traffic between networks 115 and 125 without introducing interruptions caused by access control list processing in distributed platforms.

It will be appreciated that additional embodiments implementing the various features described herein are also contemplated. For example, in one embodiment, access control lists 150 and 170 may be configured on the same interface (for example, interface 145 or 165) to permit appropriate egress and ingress processing of data packets for networks having a singe entry/exit interface. In this regard, outbound data packets may be processed in accordance with a first access control list on an egress side of the interface and inbound data packets may be processed in accordance with a second access control list on the ingress side of the interface.

In another embodiment, data sessions may be initiated from external network 125. In this regard, the associations of access control lists 150 and 170 may be reversed, with access control list 150 used to process data packets received from external network 125 through interface 165 and access control list 170 used to process data packets provided in reply from internal network 115 through interface 145. It will be appreciated that such an implementation can permit authorized remote users to access resources of trusted network 115 from external network 125.

It will also be appreciated that although various aspects of the present invention have been described with reference to IPv4 (i.e., Internet Protocol version 4), such aspects may also be utilized in accordance with other protocols such as IPv6 (i.e., Internet Protocol version 6) as well as various access control list implementations, such as L2 access control lists and those supporting Multiprotocol Label Switching (MPLS).

Where applicable, various embodiments provided by the present disclosure can be implemented using hardware, software, or combinations of hardware and software. Also where applicable, the various hardware components and/or software components set forth herein can be combined into composite components comprising software, hardware, and/or both without departing from the spirit of the present disclosure. Where applicable, the various hardware components and/or software components set forth herein can be separated into sub-components comprising software, hardware, or both without departing from the spirit of the present disclosure. In addition, where applicable, it is contemplated that software components can be implemented as hardware components, and vice-versa.

Software in accordance with the present disclosure, such as program code and/or data, can stored on one or more computer readable mediums. It is also contemplated that software identified herein can be implemented using one or more general purpose or specific purpose computers and/or computer systems, networked and/or otherwise.

Where applicable, the ordering of various steps described herein can be changed, combined into composite steps, and/or separated into sub-steps to provide features described herein.

The foregoing disclosure is not intended to limit the present invention to the precise forms or particular fields of use disclosed. It is contemplated that various alternate embodiments and/or modifications to the present invention, whether explicitly described or implied herein, are possible in light of the disclosure.

Having thus described embodiments of the present invention, persons of ordinary skill in the art will recognize that changes may be made in form and detail without departing from the scope of the invention. Thus the invention is limited only by the claims.

## Claims

1. A method of filtering data communications, the method comprising:
receiving an outgoing data packet (135) from a first network (115) at a first interface (145);
comparing the outgoing data packet (135) to a first access control list (150) associated with the first interface (145), wherein the first access control list (150) includes a first entry referencing a reflexive access control list (185) maintained by a service card (180); and
if the outgoing data packet (135) matches the first entry of the first access control list (150):
passing the outgoing data packet (135) to the service card (180),
creating, by the service card (180), a reflex entry in the reflexive access control list (185), wherein the reflex entry corresponds to the outgoing data packet (135), and
forwarding, from the service card (180), the outgoing data packet (135) to a second network (125).

2. The method of claim 1, further comprising forwarding the outgoing data packet (135) to the second network (125) if the outgoing data packet (135) matches a permit entry of the first access control list (150), or further comprising dropping the outgoing data packet (135) if the outgoing data packet (135) does not match any entry of the first access control list (150), or further comprising removing the reflex entry from the reflexive access control list (185) after a predetermined time period.

3. The method of claim 1, further comprising
receiving an incoming data packet (195) from the second network (125) at a second interface (165);
comparing the incoming data packet (195) to a second access control list (170) associated with the second interface (165), wherein the second access control list (170) includes a second entry referencing the reflexive access control list (185); and
if the incoming data packet (195) matches the second entry of the second access control list (170):
passing the incoming data packet (195) to the service card (180),
comparing, by the service card (180), the incoming data packet (195) to the reflexive access control list (185), and
forwarding, from the service card (180), the incoming data packet (195) to the first network (115) if the incoming data packet (195) matches the reflex entry of the reflexive access control list (185).

4. The method of claim 3, further comprising forwarding the incoming data packet (195) to the first network (115) if the incoming data packet (195) matches a permit entry of the second access control list (170), or further comprising dropping the incoming data packet (195) if the incoming data packet (195) does not match any entry of the second access control list (170).

5. The method of claim 3, further comprising dropping the incoming data packet (195) if the incoming data packet (195) does not match the reflex entry of the reflexive access control list (185).

6. The method of claim 3, wherein the incoming data packet (195) is responsive to the outgoing data packet (135).

7. The method of claim 3, wherein the outgoing (135) and incoming (195) data packets comprise a data session.

8. The method of claim 3, wherein the comparing the incoming data packet (195) to the reflexive access control list (185) comprises matching a communication protocol, a source address, and a destination address of the incoming data packet (195) with the reflex entry of the reflexive access list (185).

9. The method of claim 3, further comprising repeating the method for a plurality of outgoing data packets (135) and a plurality of incoming data packets (195).

10. The method of claim 3, wherein the first interface (145) and the first access control list (150) are maintained by a first line card (140), and the second interface (165) and the second access control list (170) are maintained by a second line card (160).

11. A network device (110) comprising:
a first line card (140) adapted to maintain a first access control list (150); and
a service card (180) adapted to maintain a reflexive access control list (185), wherein the reflexive access control list (185) is referenced by an entry of the first access control list (150);
wherein the first line card (140) comprises:
a first interface (145) for receiving an outgoing data packet (135) from a first network (115);
means for comparing the outgoing data packet (135) to the first access control list (150); and
means for passing the outgoing data packet (135) to the service card (180) if the outgoing data packet (135) matches the first entry of the first access control list (150); and
wherein the service card (180) comprises:
means for receiving the outgoing data packet (135) from the first line card (140);
means for creating a reflex entry in the reflexive access control list (185), wherein the reflex entry corresponds to the outgoing data packet (135); and
means for forwarding the outgoing data packet (135) to a second network (125).

12. The network device (110) of claim 11, wherein the first line card (140) further comprises:
means for forwarding the outgoing data packet (135) to the second network (125) if the outgoing data packet (135) matches a permit entry of the first access control list (150); or
means for dropping the outgoing data packet (135) if the outgoing data packet (135) does not match any entry of the first access control list (150); or
wherein the service card (180) further comprises means for removing the reflex entry from the reflexive access control list (185) after a predetermined time period.

13. The network device (110) of claim 11, wherein the network device (110) further comprises a second line card (160) adapted to maintain a second access control list (170), wherein an entry of the second access control list (170) references the reflexive access control list (185); wherein the second line card (160) comprises:
a second interface (165) for receiving an incoming data packet (195) from the second network (125);
means for comparing the incoming data packet (195) to the second access control list (170) associated with the second interface (165); and
means for passing the incoming data packet (195) to the service card (180) if the incoming data packet (195) matches the second entry of the second access control list (170); and
wherein the service card (180) further comprises:
means for receiving the incoming data packet (195) from the second line card (160);
means for comparing the incoming data packet (195) to the reflexive access control list (185), and
means for forwarding the incoming data packet (195) to the first network (115) if the incoming data packet (195) matches the reflex entry of the reflexive access control list (185).

14. The network device (110) of claim 13, wherein the second line card (160) further comprises:
means for forwarding the incoming data packet (195) to the first network (115) if the incoming data packet (195) matches a permit entry of the second access control list (170); or
means for dropping the incoming data packet (195) if the incoming data packet (195) does not match any entry of the second access control list (170).

15. A computer readable medium having computer readable code which when implemented on a service card (180) instructs a processor of the service card (180) to perform a method of filtering data communications, the method comprising:
receiving an outgoing data packet (135) from a first line card (140);
creating, by the service card (180), a reflex entry in a reflexive access control list (185) corresponding to the outgoing data packet (135);
forwarding, from the service card (180), the outgoing data packet (135) to a second line card (160);
receiving an incoming data packet (195) from the second line card (160);
comparing, by the service card (180), the incoming data packet (195) to the reflexive access control list (185); and
forwarding, from the service card (180), the incoming data packet (195) to the first line card (140) if the incoming data packet (195) matches the reflex entry of the reflexive access control list (185).

## Patentansprüche

1. Verfahren zum Filtern von Datenkommunikationen, wobei das Verfahren Folgendes beinhaltet:
Empfangen eines abgehenden Datenpakets (135) von einem ersten Netzwerk (115) an einer ersten Schnittstelle (145);
Vergleichen des abgehenden Datenpakets (135) mit einer ersten Zugangskontrollliste (150), die mit der ersten Schnittstelle (145) assoziiert ist, wobei die erste Zugangskontrollliste (150) einen ersten Eintrag aufweist, der eine reflexive Zugangskontrollliste (185) referenziert, die von einer Service-Karte (180) geführt wird; und
wenn das abgehende Datenpaket (135) mit dem ersten Eintrag der ersten Zugangskontrolliste (150) übereinstimmt:
Leiten des abgehenden Datenpakets (135) zu der Service-Karte (180),
Erzeugen, durch die Service-Karte (180), eines Reflex-Eintrags in der reflexiven Zugangskontrollliste (185), wobei der Reflex-Eintrag dem abgehenden Datenpaket (135) entspricht, und
Weiterleiten, von der Service-Karte (180), des abgehenden Datenpakets (135) zu einem zweiten Netzwerk (125) .

2. Verfahren nach Anspruch 1, das ferner das Weiterleiten des abgehenden Datenpakets (135) zum zweiten Netzwerk (125) beinhaltet, wenn das abgehende Datenpaket (135) mit einem Zulassungseintrag der ersten Zugangskontrollliste (150) übereinstimmt, oder das ferner das Fallenlassen des abgehenden Datenpakets (135) beinhaltet, wenn das abgehende Datenpaket (135) nicht mit einem Eintrag der ersten Zugangskontrollliste (150) übereinstimmt, oder das ferner das Entfernen des Reflex-Eintrags aus der reflexiven Zugangskontrollliste (185) nach einer vorbestimmten Zeitperiode beinhaltet.

3. Verfahren nach Anspruch 1, das ferner Folgendes beinhaltet:
Empfangen eines eingehenden Datenpakets (195) von dem zweiten Netzwerk (125) an einer zweiten Schnittstelle (165);
Vergleichen des eingehenden Datenpakets (195) mit einer zweiten Zugangskontrollliste (170), die mit der zweiten Schnittstelle (165) assoziiert ist, wobei die zweite Zugangskontrollliste (170) einen zweiten Eintrag aufweist, der die reflexive Zugangskontrollliste (185) referenziert; und
wenn das eingehende Datenpaket (195) mit dem zweiten Eintrag der zweiten Zugangskontrollliste (170) übereinstimmt:
Leiten des eingehenden Datenpakets (195) zu der Service-Karte (180),
Vergleichen, durch die Service-Karte (180), des eingehenden Datenpakets (195) mit der reflexiven Zugangskontrollliste (185), und
Weiterleiten, von der Service-Karte (180), des eingehenden Datenpakets (195) zum ersten Netzwerk (115), wenn das eingehende Datenpaket (195) mit dem Reflex-Eintrag der reflexiven Zugangskontrollliste (185) übereinstimmt.

4. Verfahren nach Anspruch 3, das ferner das Weiterleiten des eingehenden Datenpakets (195) zum ersten Netzwerk (115) beinhaltet, wenn das eingehende Datenpaket (195) mit einem Zulassungseintrag der zweiten Zugangskontrollliste (170) übereinstimmt, oder das ferner das Fallenlassen des eingehenden Datenpakets (195) beinhaltet, wenn das eingehende Datenpaket (195) nicht mit einem Eintrag der zweiten Zugangskontrolllise (170) übereinstimmt.

5. Verfahren nach Anspruch 3, das ferner das Fallenlassen des eingehenden Datenpakets (195) beinhaltet, wenn das eingehende Datenpaket (195) nicht mit dem Reflex-Eintrag der reflexiven Zugangskontrollliste (185) übereinstimmt.

6. Verfahren nach Anspruch 3, wobei das eingehende Datenpaket (195) auf das abgehende Datenpaket (135) reagiert.

7. Verfahren nach Anspruch 3, wobei das abgehende (135) und das eingehende (195) Datenpaket eine Datensitzung umfassen.

8. Verfahren nach Anspruch 3, wobei das Vergleichen des eingehenden Datenpakets (195) mit der reflexiven Zugangskontrollliste (185) das Abgleichen eines Kommunikationsprotokolls, einer Quelladresse und einer Zieladresse des eingehenden Datenpakets (195) mit dem Reflex-Eintrag der reflexiven Zugangsliste (185) beinhaltet.

9. Verfahren nach Anspruch 3, das ferner das Wiederholen des Verfahrens für eine Mehrzahl von abgehenden Datenpaketen (135) und eine Mehrzahl von eingehenden Datenpaketen (195) beinhaltet.

10. Verfahren nach Anspruch 3, wobei die erste Schnittstelle (145) und die erste Zugangskontrollliste (150) von einer ersten Leitungskarte (140) geführt werden und die zweite Schnittstelle (165) und die zweite Zugangskontrollliste (170) von einer zweiten Leitungskarte (160) geführt werden.

11. Netzwerkgerät (110), das Folgendes umfasst:
eine erste Leitungskarte (140), ausgelegt zum Führen einer ersten Zugangskontrollliste (150); und
eine Service-Karte (180), ausgelegt zum Führen einer reflexiven Zugangskontrollliste (185), wobei die reflexive Zugangskontrollliste (185) durch einen Eintrag der ersten Zugangskontrollliste (150) referenziert wird;
wobei die erste Leitungskarte (140) Folgendes umfasst:
eine erste Schnittstelle (145) zum Empfangen eines abgehenden Datenpakets (135) von einem ersten Netzwerk (115) ;
Mittel zum Vergleichen des abgehenden Datenpakets (135) mit der ersten Zugangskontrollliste (150); und
Mittel zum Leiten des abgehenden Datenpakets (135) zu der Service-Karte (180), wenn das abgehende Datenpaket (135) mit dem ersten Eintrag der ersten Zugangskontrollliste (150) übereinstimmt; und
wobei die Service-Karte (180) Folgendes umfasst:
Mittel zum Empfangen des abgehenden Datenpakets (135) von der ersten Leitungskarte (140);
Mittel zum Erzeugen eines Reflex-Eintrags in der reflexiven Zugangskontrollliste (185),
wobei der Reflex-Eintrag dem abgehenden Datenpaket (135) entspricht; und
Mittel zum Weiterleiten des abgehenden Datenpakets (135) zu einem zweiten Netzwerk (125).

12. Netzwerkgerät (110) nach Anspruch 11, wobei die erste Leitungskarte (140) ferner Folgendes umfasst:
Mittel zum Weiterleiten des abgehenden Datenpakets (135) zum zweiten Netzwerk (125), wenn das abgehende Datenpaket (135) mit einem Zulassungseintrag der ersten Zugangskontrollliste (150) übereinstimmt; oder
Mittel zum Fallenlassen des abgehenden Datenpakets (135), wenn das abgehende Datenpaket (135) nicht mit einem Eintrag der ersten Zugangskontrollliste (150) übereinstimmt; oder
wobei die Service-Karte (180) ferner Mittel zum Entfernen des Reflex-Eintrags aus der reflexiven Zugangskontrollliste (185) nach einer vorbestimmten Zeitperiode umfasst.

13. Netzwerkgerät (110) nach Anspruch 11, wobei das Netzwerkgerät (110) ferner eine zweite Leitungskarte (160) umfasst, ausgelegt zum Führen einer zweiten Zugangskontrollliste (170), wobei ein Eintrag der zweiten Zugangskontrollliste (170) die reflexive Zugangskontrollliste (185) referenziert; wobei die zweite Leitungskarte (160) Folgendes umfasst:
eine zweite Schnittstelle (165) zum Empfangen eines eingehenden Datenpakets (195) vom zweiten Netzwerk (125);
Mittel zum Vergleichen des eingehenden Datenpakets (195) mit der mit der zweiten Schnittstelle (165) assoziierten zweiten Zugangskontrolllise (170); und
Mittel zum Leiten des eingehenden Datenpakets (195) zu der Service-Karte (180), wenn das eingehende Datenpaket (195) mit dem zweiten Eintrag der zweiten Zugangskontrollliste (170) übereinstimmt; und
wobei die Service-Karte (180) ferner Folgendes umfasst:
Mittel zum Empfangen des eingehenden Datenpakets (195) von der zweiten Leitungskarte (160);
Mittel zum Vergleichen des eingehenden Datenpakets (195) mit der reflexiven Zugangskontrollliste (185), und
Mittel zum Weiterleiten des eingehenden Datenpakets (195) zum ersten Netzwerk (115), wenn das eingehende Datenpaket (195) mit dem Reflex-Eintrag der reflexiven Zugangskontrollliste (185) übereinstimmt.

14. Netzwerkgerät (110) nach Anspruch 13, wobei die zweite Leitungskarte (160) ferner Folgendes umfasst:
Mittel zum Weiterleiten des eingehenden Datenpakets (195) zum ersten Netzwerk (115), wenn das eingehende Datenpaket (195) mit einem Zulassungseintrag der zweiten Zugangskontrollliste (170) übereinstimmt; oder
Mittel zum Fallenlassen des eingehenden Datenpakets (195), wenn das eingehende Datenpaket (195) nicht mit einem Eintrag der zweiten Eingangskontrollliste (170) übereinstimmt.

15. Computerlesbares Medium, mit computerlesbarem Code, der bei Implementation auf einer Service-Karte (180) einen Prozessor der Service-Karte (180) anweist, ein Verfahren zum Filtern von Datenkommunikationen durchzuführen, wobei das Verfahren Folgendes beinhaltet:
Empfangen eines abgehenden Datenpakets (135) von einer ersten Leitungskarte (140);
Erzeugen, durch die Service-Karte (180), eines Reflex-Eintrags einer reflexiven Zugangskontrollliste (185) entsprechend dem abgehenden Datenpaket (135);
Weiterleiten, von der Service-Karte (180), des abgehenden Datenpakets (135) zu einer zweiten Leitungskarte (160);
Empfangen eines eingehenden Datenpakets (195) von der zweiten Leitungskarte (160);
Vergleichen, durch die Service-Karte (180), des eingehenden Datenpakets (195) mit der reflexiven Zugangskontrollliste (185); und
Weiterleiten, von der Service-Karte (180), des eingehenden Datenpakets (195) zur ersten Leitungskarte (140), wenn das eingehende Datenpaket (195) mit dem Reflex-Eintrag der reflexiven Zugangskontrollliste (185) übereinstimmt.

## Revendications

1. Procédé de filtrage de communications de données, le procédé comprenant :
la réception d'un paquet de données sortant (135) depuis un premier réseau (115) au niveau d'une première interface (145) ;
la comparaison du paquet de données sortant (135) à une première liste de contrôle d'accès (150) associée à la première interface (145), la première liste de contrôle d'accès (150) comportant une première entrée faisant référence à une liste de contrôle d'accès réflexive (185) tenue à jour par une carte de service (180) ; et
si le paquet de données sortant (135) correspond à la première entrée de la première liste de contrôle d'accès (150) :
le passage du paquet de données sortant (135) à la carte de service (180),
la création, par la carte de service (180), d'une entrée réflexive dans la liste de contrôle d'accès réflexive (185), l'entrée réflexive correspondant au paquet de données sortant (135), et
le transfert, depuis la carte de service (180), du paquet de données sortant (135) à un second réseau (125).

2. Procédé selon la revendication 1, comprenant en outre le transfert du paquet de données sortant (135) au second réseau (125) si le paquet de données sortant (135) correspond à une entrée d'autorisation de la première liste de contrôle d'accès (150), ou comprenant en outre l'abandon du paquet de données sortant (135) si le paquet de données sortant (135) ne correspond à aucune entrée de la première liste de contrôle d'accès (150), ou comprenant en outre la suppression de l'entrée réflexive de la liste de contrôle d'accès réflexive (185) après une période de temps prédéterminée.

3. Procédé selon la revendication 1, comprenant en outre
la réception d'un paquet de données entrant (195) depuis le second réseau (125) au niveau d'une seconde interface (165) ;
la comparaison du paquet de données entrant (195) à une seconde liste de contrôle d'accès (170) associée à la seconde interface (165), la seconde liste de contrôle d'accès (170) comportant une seconde entrée faisant référence à la liste de contrôle d'accès réflexive (185) ; et
si le paquet de données entrant (195) correspond à la seconde entrée de la seconde liste de contrôle d'accès (170) :
le passage du paquet de données entrant (195) à la carte de service (180),
la comparaison, par la carte de service (180), du paquet de données entrant (195) à la liste de contrôle d'accès réflexive (185), et
le transfert, depuis la carte de service (180), du paquet de données entrant (195) au premier réseau (115) si le paquet de données entrant (195) correspond à l'entrée réflexive de la liste de contrôle d'accès réflexive (185).

4. Procédé selon la revendication 3, comprenant en outre le transfert du paquet de données entrant (195) au premier réseau (115) si le paquet de données entrant (195) correspond à une entrée d'autorisation de la seconde liste de contrôle d'accès (170), ou comprenant en outre l'abandon du paquet de données entrant (195) si le paquet de données entrant (195) ne correspond à aucune entrée de la seconde liste de contrôle d'accès (170).

5. Procédé selon la revendication 3, comprenant en outre l'abandon du paquet de données entrant (195) si le paquet de données entrant (195) ne correspond pas à l'entrée réflexive de la liste de contrôle d'accès réflexive (185).

6. Procédé selon la revendication 3, dans lequel le paquet de données entrant (195) est sensible au paquet de données sortant (135).

7. Procédé selon la revendication 3, dans lequel les paquets de données sortant (135) et entrant (195) comprennent une session de données.

8. Procédé selon la revendication 3, dans lequel la comparaison du paquet de données entrant (195) à la liste de contrôle d'accès réflexive (185) comprend la mise en correspondance d'un protocole de communication, d'une adresse source, et d'une adresse destinataire du paquet de données entrant (195) avec l'entrée réflexive de la liste d'accès réflexive (185).

9. Procédé selon la revendication 3, comprenant en outre la répétition du procédé pour une pluralité de paquets de données sortants (135) et une pluralité de paquets de données entrants (195).

10. Procédé selon la revendication 3, dans lequel la première interface (145) et la première liste de contrôle d'accès (150) sont tenues à jour par une première carte de ligne (140), et la seconde interface (165) et la seconde liste de contrôle d'accès (170) sont tenues à jour par une seconde carte de ligne (160).

11. Dispositif de réseau (110) comprenant :
une première carte de ligne (140) adaptée pour tenir à jour une première liste de contrôle d'accès (150) ; et
une carte de service (180) adaptée pour tenir à jour une liste de contrôle d'accès réflexive (185), la liste de contrôle d'accès réflexive (185) étant référencée par une entrée de la première liste de contrôle d'accès (150) ;
dans lequel la première carte de ligne (140) comprend:
une première interface (145) destinée à recevoir un paquet de données sortant (135) depuis un premier réseau (115) ;
un moyen de comparaison du paquet de données sortant (135) à la première liste de contrôle d'accès (150) ; et
un moyen de passage du paquet de données sortant (135) à la carte de service (180) si le paquet de données sortant (135) correspond à la première entrée de la première liste de contrôle d'accès (150) ; et
dans lequel la carte de service (180) comprend :
un moyen de réception du paquet de données sortant (135) depuis la première carte de ligne (140) ;
un moyen de création d'une entrée réflexive dans la liste de contrôle d'accès réflexive (185), l'entrée réflexive correspondant au paquet de données sortant (135); et
un moyen de transfert du paquet de données sortant (135) à un second réseau (125).

12. Dispositif de réseau (110) of claim 11, dans lequel la première carte de ligne (140) comprend en outre :
un moyen de transfert du paquet de données sortant (135) au second réseau (125) si le paquet de données sortant (135) correspond à une entrée d'autorisation de la première liste de contrôle d'accès (150) ; ou
un moyen d'abandon du paquet de données sortant (135) si le paquet de données sortant (135) ne correspond à aucune entrée de la première liste de contrôle d'accès (150) ; ou
dans lequel la carte de service (180) comprend en outre un moyen de suppression de l'entrée réflexive depuis la liste de contrôle d'accès réflexive (185) après une période de temps prédéterminée.

13. Dispositif de réseau (110) selon la revendication 11, le dispositif de réseau (110) comprenant en outre une seconde carte de ligne (160) adaptée pour tenir à jour une seconde liste de contrôle d'accès (170), une entrée de la seconde liste de contrôle d'accès (170) faisant référence à la liste de contrôle d'accès réflexive (185); la seconde carte de ligne (160) comprenant :
une seconde interface (165) destinée à recevoir un paquet de données entrant (195) depuis le second réseau (125) ;
un moyen de comparaison du paquet de données entrant (195) à la seconde liste de contrôle d'accès (170) associée à la seconde interface (165) ; et
un moyen de passage du paquet de données entrant (195) à la carte de service (180) si le paquet de données entrant (195) correspond à la seconde entrée de la seconde liste de contrôle d'accès (170) ; et
dans lequel la carte de service (180) comprend en outre :
un moyen de réception du paquet de données entrant (195) depuis la seconde carte de ligne (160) ;
un moyen de comparaison du paquet de données entrant (195) à la liste de contrôle d'accès réflexive (185), et
un moyen de transfert du paquet de données entrant (195) au premier réseau (115) si le paquet de données entrant (195) correspond à l'entrée réflexive de la liste de contrôle d'accès réflexive (185).

14. Dispositif de réseau (110) selon la revendication 13, dans lequel la seconde carte de ligne (160) comprend en outre :
un moyen de transfert du paquet de données entrant (195) au premier réseau (115) si le paquet de données entrant (195) correspond à une entrée d'autorisation de la seconde liste de contrôle d'accès (170) ; ou
un moyen d'abandon du paquet de données entrant (195) si le paquet de données entrant (195) ne correspond à aucune entrée de la seconde liste de contrôle d'accès (170).

15. Support lisible par ordinateur comportant un code lisible par ordinateur qui, à sa mise en oeuvre sur une carte de service (180) donne instruction à un processeur de la carte de service (180) d'exécuter un procédé de filtrage de communications de données, le procédé comprenant :
la réception d'un paquet de données sortant (135) depuis une première carte de ligne (140) ;
la création, par la carte de service (180), d'une entrée réflexive dans une liste de contrôle d'accès réflexive (185) correspondant au paquet de données sortant (135) ;
le transfert, depuis la carte de service (180), du paquet de données sortant (135) à une seconde carte de ligne (160) ;
la réception d'un paquet de données entrant (195) depuis la seconde carte de ligne (160) ;
la comparaison, par la carte de service (180), du paquet de données entrant (195) à la liste de contrôle d'accès réflexive (185) ; et
le transfert, depuis la carte de service (180), du paquet de données entrant (195) à la première carte de ligne (140) si le paquet de données entrant (195) correspond à l'entrée réflexive de la liste de contrôle d'accès réflexive (185) .
